# EUROPEAN PATENT SPECIFICATION

(11) **EP 0 654 012 B1**
(45) Date of publication and mention of the grant of the patent: **14.05.1997**
(21) Application number: 93917628.5
(22) Date of filing: 22.07.1993
(51) Int. Cl.: C01B 3/58, B01J 23/40, B01D 53/86

(54) **REMOVAL OF CHLORINE FROM HYDROGEN GAS MIXTURES BY CONVERSION IN THE PRESENCE OF PLATINUM OR PALLADIUM CATALYSTS**
ENTFERNUNG VON CHLOR AUS WASSERSTOFF ENTHALTENDEN GASMISCHUNGEN DURCH UMWANDLUNG IN ANWESENHEIT VON PLATIN- ODER PALLADIUMKATALYSATORen
ELIMINATION DU CHLORE DANS DES MELANGES D'HYDROGENE GAZEUX PAR CONVERSION EN PRESENCE DE CATALYSEURS AU PLATINE OU AU PALLADIUM

(30) Priority: 04.08.1992 DE 4225764
(43) Date of publication of application: 24.05.1995
(73) Proprietor: BAYER AG, 51368 Leverkusen (DE)
(72) Inventor: BISKUP, Klaus, D-51373 Leverkusen (DE); LIMBÄCKER, Brigitte, D-40668 Meerbusch (DE)
(86) International application number: EP9301958
(87) International publication number: WO9403394

(56) References cited:
- DE-A- 2 848 978
- US-A- 3 146 061
- US-A- 4 999 174

## Description

This invention relates to a process for the reaction of residual chlorine contents in hydrogen containing water vapour and hydrogen chloride to form hydrogen chloride.

The hydrogen formed when hydrochloric acid is electrolysed in diaphragm cells is saturated with water vapour and hydrogen chloride. It also contains chlorine in an amount of the order of about 2 volumes % which has diffused through the diaphragm due to the slight excess pressure on the chlorine side. The required working up of hydrogen therefore includes not only cooling from the temperature of 70 to 80°C, at which the hydrogen leaves the electrolytic cell, to about 35°C, at which most of the hydrogen chloride remains in the condensed water, but also alkaline washing with sodium hydroxide solution which removes the chlorine as well as the residual hydrogen chloride, an aqueous solution of sodium hypochloride/sodium chloride known as chlorine bleach being thereby produced (e.g. Ullman, Vol. AG, fifth edition, 1988, p.460). If there is no user for the chlorine bleach, the chlorine may be retained by acidification but this process has the disadvantage, apart from the additional consumption of acid, that it gives rise to effluent polluted with salts.

In US 4,999,174 a process for the removal of chlorine from reducing gases is provided wherein the reducing gases are contacted with cerium oxyde. According to the US-Patent the chlorine reacts with the cerium catalyst forming CeCl_{3,} which need to be regenerated quite often. The regeneration of the cerium catalyst makes the process of the US-Patent expensive.

It has now been found that the formation of chlorine bleach and hence the need for its decomposition can to a large extent be avoided by passing the chlorine-containing hydrogen gas from the electrolytic cell over a platinum or palladium catalyst under the process conditions described below so that the chlorine reacts with hydrogen to form hydrogen chloride. This is then separated off together with the hydrogen chloride which was already present, whereby the sodium hydroxide consumption is substantially reduced.

The present invention is suitable in particular for the removal of residual chlorine contents from gas mixtures which are formed on the catholyte side when aqueous hydrochloric acid is electrolytically decomposed in electrolytic diaphragm cells and which in addition to containing hydrogen contain up to 3 volumes % of chlorine as well as water vapour and hydrogen chloride in amounts depending on the vapour pressure of the hydrochloric acid. The temperature of the gas mixture is that of the electrolytic cell and is generally from 70 to 80°C.

Since the gas mixture put into the process is generally saturated with water vapour, even slight cooling due to heat losses is liable to cause condensation of water which is then precipitated on the catalyst described below and rapidly inactivates the catalyst. The temperature must therefore distinctly exceed the dew point if the catalyst is to have a sufficiently long working life. This may be brought about e.g. by diluting the gas mixture with a gas which is not saturated with water vapour so that the dew point temperature is lowered.

Another method of avoiding condensation, which is preferred for the process according to the invention, consists of heating the gas mixture so that heat losses are compensated and indeed slightly over-compensated. This heating may be carried out as secondary heating of the pipes and of the reactor described below or the gas mixture may be heated in a separate heat exchanger upstream of the reactor.

For carrying out the subsequent process according to the invention, the heated gas mixture is continuously passed through a reactor containing the catalyst described below. The continuous flow of gas mixture through the reactor is maintained by a pressure difference between the gas inlet and the gas outlet of the reactor.

Tubular reactors through which the gas mixture flows from one end to the other are suitable for the process according to the invention. Tubular reactors are generally made of glass, enamelled steel or plastic and are so designed that their volumetric capacity is sufficient to receive the quantity of catalyst required for complete reaction of the chlorine with hydrogen. The dimensions of the tubular reactors should be chosen to provide a ratio of length to diameter of at least 3, preferably not less than 10.

The catalyst used for the process according to the invention is composed of a carrier material having catalytically active metal in a finely divided form on its surface.

All solid substances conventionally used as catalyst carriers may be used for the carrier material, for example, zeolites, polymeric silicas, kieselguhr, pumice stone, aluminium oxide, synthetic resins, active charcoals or mixtures thereof. In the process according to the invention, the carrier materials are used e.g. in the form of beads, rods, strands or tablets but may equally well be irregular in shape. This is not important for the progress of the process, provided only that the dimensions of the individual particles of the carrier material enable the material to be uniformly packed across the diameter of the reactor so as to avoid the formation of channels, tunnels or bridges. It is advantageous, for example, to use a carrier material in the form of beads such that the ratio of the diameter of the reactor to the diameter of the beads is greater than 7.

The metal, which is the catalytically active substance proper of the catalyst, is applied to the carrier material in known manner. This is generally carried out by impregnating the carrier material with a solution containing a compound of the metal in a solvent such as water, alcohol or the like and then drying the material and releasing the elementary metal by a chemical reaction. Such a method of preparation of catalysts is described by way of example in DE-A-2 848 978.

Platinum and palladium have proved to be suitable metals for the catalysis of chlorine with hydrogen under the conditions of the process according to the invention. Each of these metals may be used on its own or they may be used as a mixture with one another. The concentration of metal on carrier material is preferably from 5 to 10 g per litre of catalyst.

The contact time of the gas with the heap of catalyst required for at least 95% conversion of the chlorine is from 0.3 to 3 seconds, preferably from 0.6 to 1 second. The contact time within these limits depends on the temperature, the "pore size" of the intergrain volume of the catalyst and the amount of catalytic metal applied to the catalyst carrier. At a given rate of throughput of gas, the contact time may be predetermined by choice of the depth of the heap of catalyst and the intergrain volume, which is determined by the shape of the catalyst carrier.

Catalysts of the type described above are capable of completely converting from 3 to 6 kg of chlorine per litre of catalyst under the conditions of the process according to the invention. The loss in activity as input of chlorine continues can be reversed by rinsing the catalyst with hydrogen which is free from chlorine. An uninterrupted process therefore requires at least two alternately operating tubular reactors filled with catalyst.

### Examples

### Example 1

The catalyst used is platinum on aluminium oxide in the form of tablets 3 mm in diameter and 3 mm in length (Aldrich company, order NO. 23 211-4).

The reactor is a glass tube having an internal diameter of 10 mm; it is filled with catalyst to a height of 360 mm. The temperature of the reactor can be controlled by air flowing through a double jacket.

A mixture of 141 l/h of hydrogen and 3 I/h of chlorine first flows through temperature controlled 20% hydrochloric acid and then through the reactor. The heating means are adjusted so that the temperature in the air bath of the reactor is about 5°C higher than in the hydrochloric acid.

To analyze the chlorine concentration at the outlet of the reactor, gas samples are reacted with aqueous potassium iodide solution and the iodine formed is titrated with sodium sulphate.

Table 1 shows the chlorine concentrations obtained at various reactor temperatures in dependence upon the operating time in minutes.

**Table 1:**

| Dependence of the Catalyst activity on the Temperature | | | | | | | |
|---|---|---|---|---|---|---|---|
| Time (Min) | Temp. (°C) | 30 | 40 | 50 | 60 | 70 | 80 |
| 30 | Chlorine conc. (vol %) | 0.2 | 0.2 | n.d. | n.d. | n.d. | n.d. |
| 90 | | 0.2 | 1.0 | n.d. | n.d. | n.d. | n.d. |
| 120 | | - | - | n.d. | n.d. | n.d. | n.d. |
| 150 | | - | - | n.d. | n.d. | n.d. | n.d. |
| n.d. = not detectable | | | | | | | |

### Example 2

Using the apparatus and catalyst of Example 1, the contact time of the gas mixture is varied by varying the quantity of catalyst in the reactor. The quantity and composition of the gas are the same as in Example 1; the temperature of the reactor is 70°C.

Table 2 shows the results of the experimental series.

**Table 2:**

| Dependence of the Catalyst Activity on the Contact Time | | | | | |
|---|---|---|---|---|---|
| Time (Min) | Filling height (mm) Contact time (sec) | 85 0.07 | 105 0.09 | 155 0.13 | 350 0.30 |
| 30 | Chlorine conc. (ppm) | 2090 | 850 | 10 | n.d. |
| 60 | | 3900 | - | 280 | n.d. |
| 90 | | - | - | - | n.d. |
| 120 | | - | - | - | n.d. |
| 150 | | - | - | - | n.d. |

### Example 3

The catalyst used is platinum on active charcoal (4 g Pt per litre of catalyst) in the form of rods having a diameter of 3 mm and length of 9 mm.

The tubular reactor has an internal diameter of 28 mm and the volume of catalyst in the reactor is 62 cm³.

The gas mixture consists of 98 I/h of hydrogen and 2 l/h of chlorine. Since the intergrain volume amounts to 52%, this provides a contact time of the gas of 0.9 sec.

Before entering the reactor, the gas mixture flows through 20% hydrochloric acid which is at 70°C. The temperature of the reactor is also 70°C. After an operating time of 3 h, 0.5 vol % of chlorine are found at the outlet of the reactor.

### Example 4

Repetition of Example 3 but with a reactor temperature of 80°C.

No chlorine is detected at the outlet of the reactor up to an experimental time of 15 h. During the next 16 h, the chlorine concentration is about 10 ppm, and it then rises to 1.5 vol% within 1 h.

When the experiment is repeated with the catalyst carrier not impregnated with platinum, chlorine is detected after only 1.5 h while 147 I/h of hydrogen and 3 I/h of chlorine are passed through.

### Example 5

The catalyst used is platinum on an aluminium oxide carrier having a small BET surface area (α-Al₂O₃) in the form of beads 4.2 mm in diameter. The platinum concentration is 8 g of Pt per litre of catalyst.

62 cm³ of catalyst are again introduced into the reactor used in Example 3 With an intergrain volume of 55%, this provides a contact time of 0.8 seconds for the mixture of 147 l/h of hydrogen and 3 I/h of chlorine.

The 20% hydrochloric acid through which the gas mixture flows before entering the reactor is at a temperature of 70°C and the reactor is maintained at 80°C.

During an operating time of 10 h, no chlorine can be detected at the outlet of the reactor. Up to 2 ppm are then found during a further 10 h. Thereafter, the concentration rises to 0.1 vol% in the course of a further 30 min.

The experiment is repeated after regeneration of the catalyst with chlorine-free hydrogen at 80°C for 1 h. No chlorine is detected during an operating period of 13 h and less than 2 ppm of chlorine is found at the outlet of the reactor during the next 9 h.

When a test is carried out with the carrier material without platinum, 2.0 vol% of chlorine is immediately measured.

### Example 6

The catalyst used is palladium on an aluminium oxide carrier which is in the form of beads 3.7 mm in diameter and has a medium BET surface area (δ-Al₂O₃). The palladium content is 9 g per litre of catalyst.

Apparatus, quantities and reaction conditions are the same as those of Example 5; with an intergrain volume of 48%, the contact time is 0.7 sec.

No chlorine is detected at the outlet of the reactor during an experimental period of 40 h; the chlorine concentration thereafter rises to 500 ppm within 30 min.

When the experiment was repeated with catalyst carrier without palladium, 2 vol% of chlorine was immediately found at the outlet of the reactor.

## Claims

1. A process for the conversion of residual chlorine contents in hydrogen containing water vapour and hydrogen chloride to hydrogen chloride, characterized in that the gas mixture is brought into contact with a platinum and/or Pd-catalyst at a temperature above the dew point.

2. A process according to Claim 1, characterized in that the contact time is from 0.3 to 3 seconds.

3. A process according to Claim 1 or Claim 2, characterized in that the temperature of the catalyst is from 1 to 20 deg. Cent., preferably from 2 to 10 deg. Cent., above the dew point of the gas mixture.

4. A process according to one of the Claims 1 to 3, characterized in that the reaction is carried out at normal pressure.

5. A process according to one of the Claims 1 to 4, characterized in that the catalyst consists of Pt or Pd applied to a catalyst carrier.

6. A process according to Claim 5, characterized in that the catalyst carrier has a particle size of from 2 to 30 mm and is used in the form of loose catalyst material.

7. A process according to one of the Claims 1 to 6, characterized in that when the catalyst has become inactive, it is reactivated by contact with chlorine-free hydrogen gas.

## Patentansprüche

1. Verfahren zur Umwandlung von Restchlorgehalten in Wasserstoff, der Wasserdampf und Chlorwasserstoff enthält, in Chlorwasserstoff, dadurch gekennzeichnet, daß das Gasgemisch bei einer Temperatur oberhalb des Taupunktes mit einem Platin- und/oder Pd-Katalysator in Kontakt gebracht wird.

2. Verfahren gemäß Anspruch 1, dadurch gekennzeichnet, daß die Kontaktzeit 0,3 bis 3 Sekunden beträgt.

3. Verfahren gemäß Anspruch 1 oder 2, dadurch gekennzeichnet, daß die Temperatur des Katalysators 1 bis 20°C, vorzugsweise 2 bis 10°C, über dem Taupunkt des Gasgemisches liegt.

4. Verfahren gemäß einem der Ansprüche 1 bis 3, dadurch gekennzeichnet, daß die Reaktion bei normalem Druck durchgeführt wird.

5. Verfahren gemäß einem der Ansprüche 1 bis 4, dadurch gekennzeichnet, daß der Katalysator aus Pt oder Pd besteht, das auf einen Katalysatorträger aufgebracht ist.

6. Verfahren gemäß Anspruch 5, dadurch gekennzeichnet, daß der Katalysatorträger eine Teilchengröße von 2 bis 30 mm hat und in Form von losem Katalysatormaterial verwendet wird.

7. Verfahren gemäß einem der Ansprüche 1 bis 6, dadurch gekennzeichnet, daß der Katalysator, wenn er inaktiv geworden ist, durch Kontakt mit chlorfreiem Wasserstoffgas reaktiviert wird.

## Revendications

1. Procédé de transformation de teneurs en chlore résiduel dans de l'hydrogène contenant de la vapeur d'eau et du chlorure d'hydrogène en chlorure d'hydrogène, caractérisé en ce que le mélange gazeux est mis en contact avec un catalyseur au platine et/ou au palladium à une température supérieure au point de condensation.

2. Procédé selon la revendication 1, caractérisé en ce que la durée de contact est comprise entre 0,3 et 3 s.

3. Procédé selon la revendication 1 ou la revendication 2, caractérisé en ce que la température du catalyseur est de 1 à 20°C et de préférence de 2 à 10°C au-dessus du point de condensation du mélange gazeux.

4. Procédé selon l'une des revendications 1 à 3, caractérisé en ce que la réaction est mise en oeuvre à la pression normale.

5. Procédé selon l'une des revendications 1 à 4, caractérisé en ce que le catalyseur est constitué de Pt ou de Pd appliqué sur un support de catalyseur.

6. Procédé selon la revendication 5, caractérisé en ce que le support de catalyseur possède une dimension de particules comprise entre 2 et 30 mm et est utilisé sous la forme d'un matériau de catalyseur lâche.

7. Procédé selon l'une des revendications 1 à 6, caractérisé en ce que, lorsque le catalyseur est devenu inactif, il est réactivé par un contact avec de l'hydrogène gazeux exempt de chlore.
